# NEW EUROPEAN PATENT SPECIFICATION

(11) **EP 0 826 449 B2**
(45) Date of publication and mention of the opposition decision: **23.11.2005**
(45) Mention of the grant of the patent: 23.10.2002
(21) Application number: 97112171.0
(22) Date of filing: 16.07.1997
(51) Int. Cl.: B22F 5/08, B22F 3/03

(54) **Object composed of compacted powders and method of producing the same**
Formkörper aus gepresstem Pulver und Verfahren seiner Herstellung
Article en poudre comprimée et son procédé de fabrication

(30) Priority: 27.08.1996 JP 22479796
(43) Date of publication of application: 04.03.1998
(73) Proprietor: HONDA GIKEN KOGYO KABUSHIKI KAISHA, Minato-ku, Tokyo (JP)
(72) Inventor: Narita, Masaaki, 4-1, Chuo 1-chome, Wako-Shi, Saitama (JP); Ooshiro, Rikiya, Honda Giken Kogyo K.K., Hamamatsu-shi, Shizuoka (JP); Kino, Yoshitaka, Honda Giken Kogyo K.K., Hamamatsu-shi, Shizuoka (JP); Ikeda, Toshimi, Honda Giken Kogyo K.K., Hamamatsu-shi, Shizuoka (JP); Hatagami, Yasunori, Honda Giken Kogyo K.K., Hamamatsu-shi, Shizuoka (JP); Miki, Seiji, Honda Giken Kogyo K.K., Hamamatsu-shi, Shizuoka (JP)
(74) Representative: Liska, Horst

(56) References cited:
- EP-A- 0 812 640
- DE-A- 2 219 856
- PATENT ABSTRACTS OF JAPAN vol. 016, no. 239 (M-1258), 2 June 1992 & JP 04 052204 A (MITSUBISHI MATERIALS CORP), 20 February 1992,
- Lehrgangsband der Technischen Akademie Esslingen zu Lehrgang Nr. 5554/61.002 (1982), figures 12 and 13

## Description

The present invention relates to an object composed of compacted powder, and more particularly a method of producing such an object having a flat body and a short columnar projection extending from one side of the flat body.

It is well-known that a first driven gear of a multiple disk clutch is realized by an object composed of compacted powder.

The peripheral edge of the object corresponds to a toothed part of a sintered first driven gear, and a short columnar projection extending from the object corresponds to a boss of the driven gear. The short columnar projection has an outer diameter which remains the same along its axis.

JP-A-04 05 22 04 discloses a method for the production of such a gear.

The foregoing object is produced in such a manner that its short columnar projection faces downward in order to raise its density to a required level, as exemplified in Japanese Utility Model Publication No. Hei 7-026072.

However, If the related art method is used, when the object made of compressed powder is transported to a fumace after being formed, it must be turned upside down In orderto cause a short columnar projection to face upward so as to prevent damage to the projection, and this increases the number of steps in a manufacturing process.

The foregoing problem may be solved by producing the object In such a manner that its short columnar projection faces upward. However, when the short columnar projection has an outer diameter which is substantially equal along its entire length in the axial direction, a sufficient amount of powder cannot always be supplied to a region for the short columnar projection through a die hole. Therefore, the density of powder in the short columnar projection cannot be raised to a desired level.

EP 0812640-A1 as prior art pursuant to Article 54(3) and (4) EPC for the Contracting States Germany, Spain and Italy discloses an object composed of compacted powder including a flat body and a short columnar projection extending from one side of the flat body, wherein the short columnar projection has a tapered part and a straight part. The straight part can be regarded as upright, depending on how the object is tumed. The sectional area of the tapered part in a plane crossing the axis of the flat body is gradually reduced as the tapered part approaches the upright part, and a sectional area of the upright part is constant with respect to the axis of the flat body.

The present invention is intended to provide an object which is composed of compacted powder, and includes a short columnar projection facing, upward and having a density of a desired level.

In order to accomplish the foregoing, there is provided an object according to claim 1 and methods for producing such an object according to claims 4 and 5.

When the method is used to produce the object having the short columnar projection facing upward, it is possible to enlarge the sectional area of the tapered part in a die hole for forming the tapered part of the object. The tapered part of the die hole functions to guide the powder. When compacting, a sufficient amount of powder can be supplied to the tapered part of the die hole. Therefore, the short columnar projection of the object can have a density of a required level.

Further, the foregoing method produces the object which is composed of compacted powder and has the short columnar projection having a density of a required level.

The foregoing method is performed by a press which Includes a die, a lower punch being slidable in a die hole, and an upper punch facing the lower punch and being slidable in the die hole. The press is used to fill the die hole with powder and to compact the powder. When compacting the powder, the flat body is formed in a first step in which the powder is made to flow from a region corresponding to the flat body to a region corresponding to the upright part via a region corresponding to the tapered part, and the short columnar projection is formed in a second step.

In the compacting step, a sufficient amount of powder can be supplied to the regions for forming the upright part and the tapered part. No powder will flow back to the region for forming the flat body from the regions where the upright and tapered parts are formed. Further, the upright part has a constant sectional area, so that the powder is compacted in the axial direction of the upright part. Therefore, the short columnar projection can have the required density.

The short columnar projection faces upward, so that the object can be delivered by a conveyor without changing its orientation. No tuming of the object is necessary.

When the punches are moved as described in the first step, the regions for forming the tapered part and the upright part approach a mass of the powder which is pushed out from the region for forming the flat body, sticks to the outer surface of the core, and becomes denser near the core. The mass is then removed from the core, and pushed toward the regions for forming the tapered and upright parts by the lower inner punch. Therefore, more powder is supplied to these regions as described above.

The punches are moved in the second step as described above, so that the powder can flow in the regions for forming the tapered and upright parts. Therefore, all of the powder can be sufficiently compacted.

The short columnar projection can have a high density compared with the short columnar projection of the related art which does not have any tapered part.

The foregoing effect is accomplished by the method in which the die and the upper and lower punches are kept stationary while the core is raised, and by the method in which the die and the upper and lower punches are lowered but the core is raised.

Now, the invention is described in detailed embodiments under reference to the attached drawings, wherein:
Fig. 1 is a section of an assembly of a clutch outer and a first sintered driven gear.
Fig. 2 is a section of the object composed of compacted powder.
Fig. 3 is a section of the object, taken along line 3-3 in Fig. 2.
Fig. 4 shows a state in which a die is filled with powder using the first method.
Fig. 5 shows an initial stage of a powder compacting process in the first method.
Fig. 6 shows a middle stage of the powder compacting process.
Fig. 7 shows how the disc is produced in the powder compacting process in the first method.
Fig. 8 shows how the short columnar projection is shaped.
Fig. 9 shows how the object is released from the press.
Fig. 10 shows how the disc is produced in the powder compacting process in the second method.
Fig. 11 shows how the boss is produced by the second method.

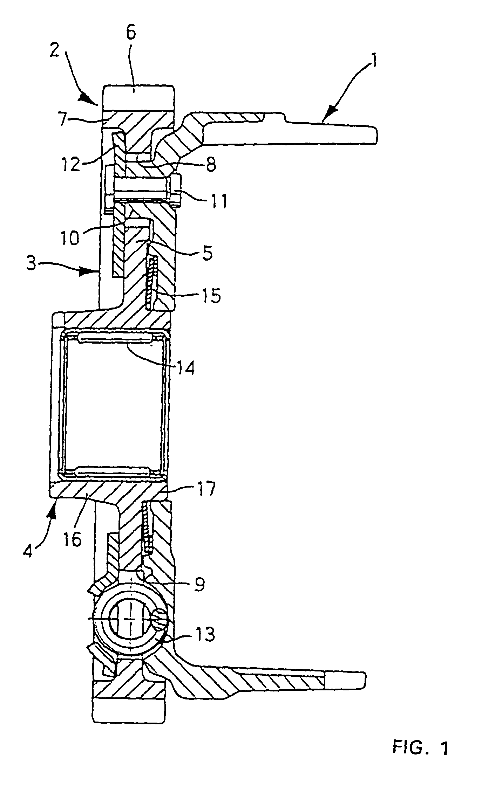

Referring to. Fig. 1, a multiple disk clutch comprises a clutch outer 1, and a sintered first driven gear 2. The sintered first driven gear 2 is composed of compacted powder. The sintered first driven gear 2 comprises a gear disc 3 and a boss 4 protruding from the center of the gear disc 3. The gear disc 3 includes a thin annular part 5, and a thick annular part 7 as integral members. The gear disc 3 has a plurality of teeth 6. The thin annular part 5 has a plurality of oval holes 8 and a plurality of rectangular holes 9. In orderto assemble the clutch, projections 10 of the clutch outer 1 are fitted into the oval holes 8 of the sintered first driven gear 2, and the sintered first driven gear 2 is attached to the clutch outer 1 via rivets 11 passing through the projections 10 and a push plate 12 attached to the rivets 11. Damping springs 13 are fitted into the rectangular holes 9 of the gear disc 3, and are retained by the clutch outer 1 and the push plate 12. An input shaft of a transmission (not shown) is fitted into the boss 4 via a needle bearing 14. A friction spring 15 is disposed between the gear disc 3 and the clutch outer 1.

The boss 4 includes a main part 16 and an annular part 17 which extend from opposite sides of the gear disc 3. On one side of the gear disc 3, the main part 16 extends higher than a thick annular part 7 of the gear disc 3. On the other side of the gear disc 3, the annular part 17 is as high as the thick annular part 7.

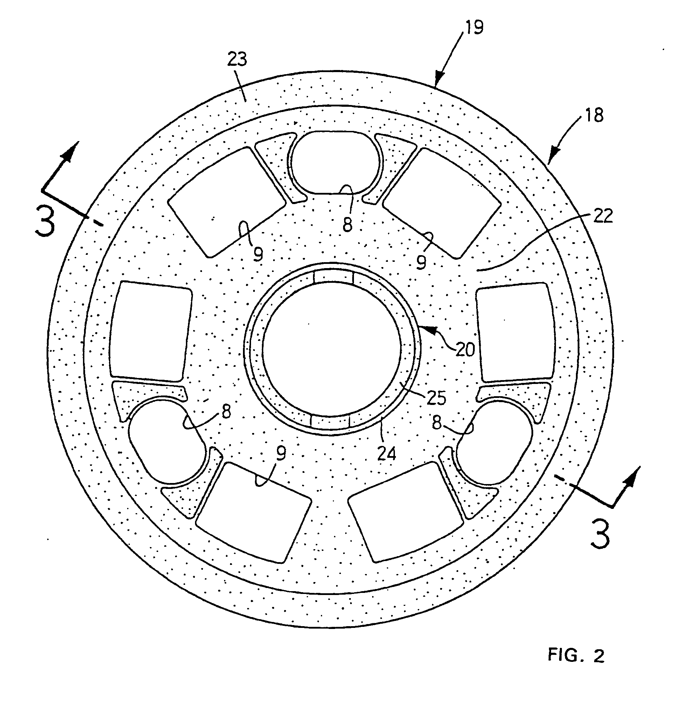

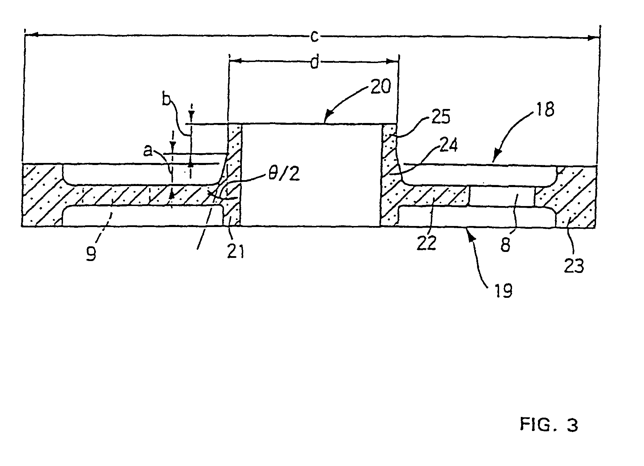

Figs. 2 and 3 show an object 18 which is composed of compacted powder, and is used as a material for the sintered first driven gear 2 of the multiple disc clutch. The object 18 includes a disc 19, a short columnar projection 20 extending from one side of the disc 19, and an annular part 21 extending from the other side of the disc 19. The short columnar projection 20 corresponds to the main body 16 of the boss 4, and the annular part 21 corresponds to the annular part 17 of the boss 4. The disc 19 includes a thick annular part 23 corresponding to the thick annular part 7, and a thin annular part 22 corresponding to the thin annular part 7. Oval holes 8 and rectangular holes 23 are formed on the thin annular part 22. The short columnar projection 20 extends further outward than one side surface of the thick annular part 23. The end surface of the annular part 21 is the same height as the other side surface of the thick annular part 23.

The short columnar projection 20 includes a tapered part 24 and an upright part 25 extending from the tapered part 24. A sectional area of the tapered part 24 in a plane crossing the axis of the disc 19 is gradually reduced as the tapered part 24 extends farther from the disc 19, i.e. the tapered part 24 is in the shape of a truncated cone in this embodiment. A sectional area of the upright part 25 is constant with respect to the axis of the disc 19, i.e. the upright part 25 is cylindrical.

It is preferable that the tapered part 24 is tapered by an angle θ, where 10° ≤ θ ≤ 50° in order that the short columnar projection 20 faces upward and has an increased density. Further, it is preferable that an axial length "a" of the tapered part 24 and an axial length "b" of the upright part 25 are in the ratio a/b of 0.8 ≤ a/b ≤ 1.3. The tapering angle θ is preferably 15°, and the ratio a/b is preferably 1 ≤ a/b ≤ 1.1.

Further, it is preferable that a ratio between an outer diameter "c" of the disc 19 and an outer diameter "d" of the upright part 25 is 0.25 ≤ d/c ≤ 0.35. The object 18 has to satisfy the foregoing requirements.

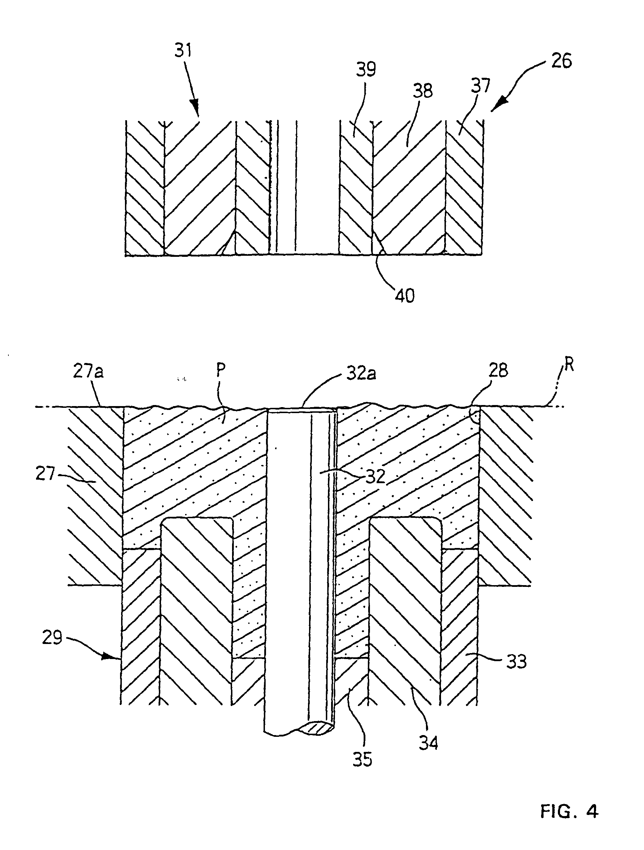

Referring to Fig. 4, a press 26 for producing the object 18 comprises a lengthwise movable die 27, a stationary core 32 at the center of a die hole 28, a lengthwise movable lower punch 29 which is slidably engaged with the die hole 28, and an upper punch 31 which confronts the lower punch 29, and is slidably fitted in the core 32 and the die hole 28.

The lower punch 29 includes a lower outer cylindrical punch 33 which is slidable in the die hole 28, a lower middle cylindrical punch 34 which is inside the lower outer cylindrical punch 33, and a cylindrical lower inner punch 35 which is inside the lower middle punch 34 and is slidable in the core 32.

The upper punch 31 comprises an upper outer cylindrical punch 37 which is slidably fitted in the die hole 28, an upper middle cylindrical punch 38 which is inside the upper outer punch 37, and an upper inner cylindrical punch 39 which is inside the upper middle punch 38 and is slidably fitted in the core 32.

The outer punches 37 and 33 are mainly used for forming the annular thick part 23 of the object 18. The lower middle punches 38 and 34 are used for forming the thin annular part 22, while the lower inner punches 39 and 35 are used to form the short columnar projection 20 and the annular part 21.

The upper middle punch 38 has a tapered part 40 at its inner lower end. The tapered part 40 is in the shape of a truncated cone, and corresponds to the tapered part 24 of the short columnar projection 20.

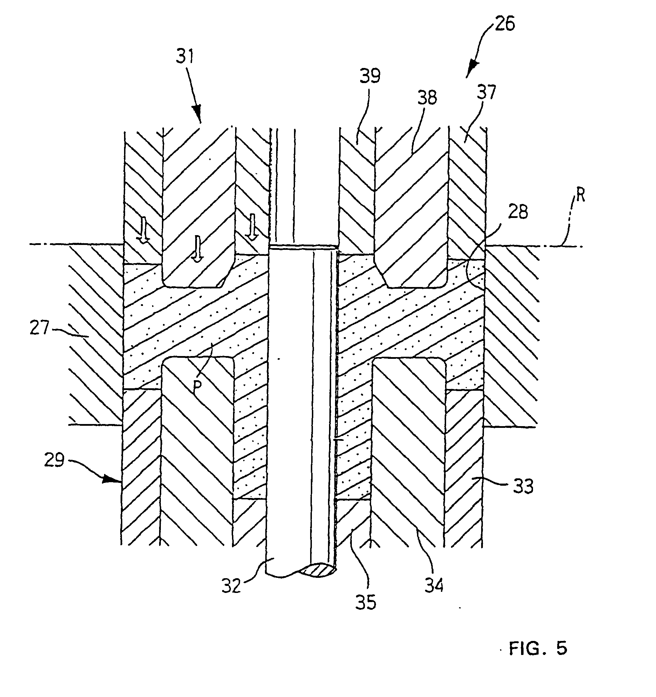

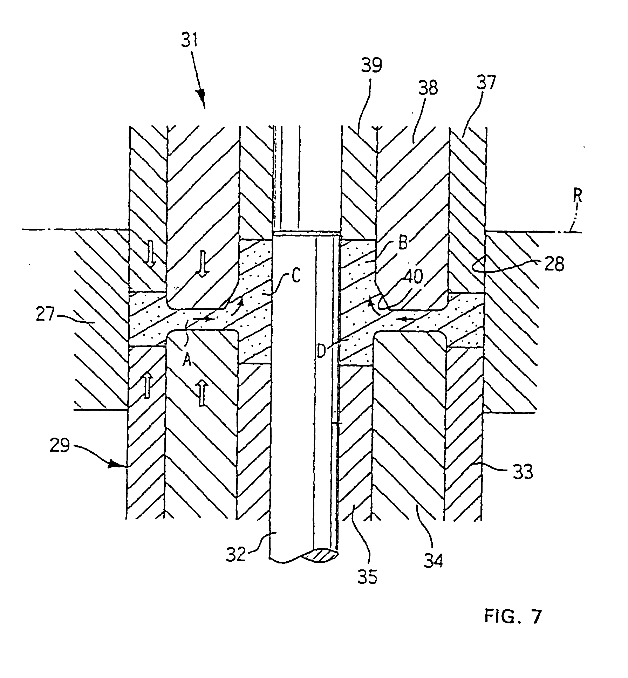

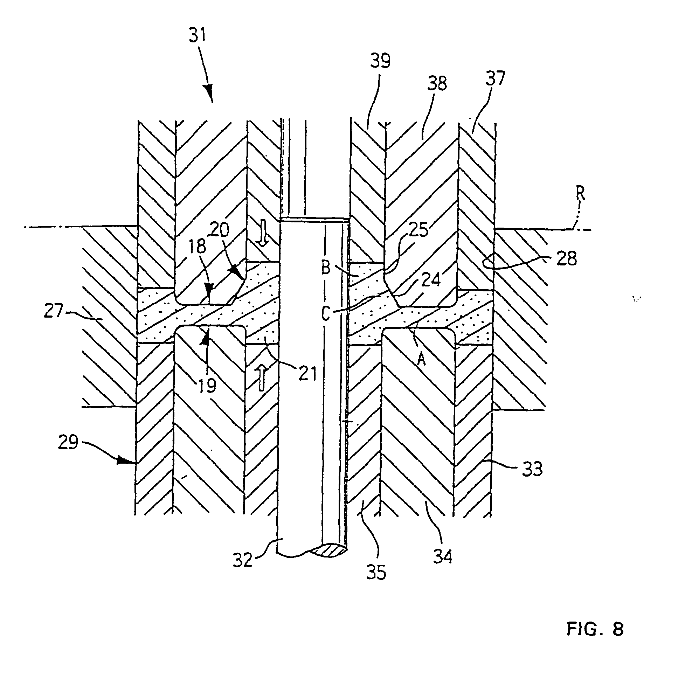

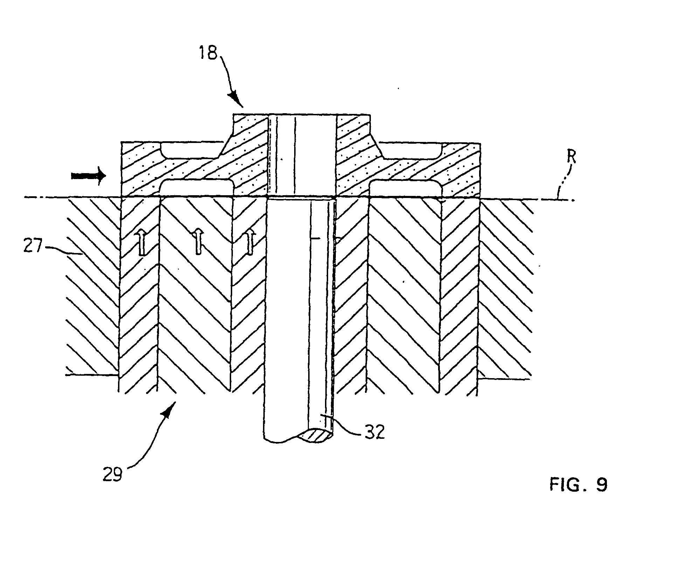

The object 18 is produced as follows by a first method.
(a) Referring to Fig. 4, in the lower punch 29, the lower middle punch 34, the lower outer punch 33 and the lower inner punch 35 are held at respective predetermined positions in accordance with levels to which they are lowered. The die 27 is positioned at the reference position R with its upper surface 27a being flush with the upper surface 32a of the core 32.
(b) As shown in Fig. 5, in the upper punch 31, the upper inner punch 39, the upper outer punch 37 and the upper middle punch 38 are held at respective predetermined positions in accordance with levels to which they are lowered. Thereafter, the upper outer punch 37 is fitted in the die hole 28, and the upper inner punch 39 is engaged with the core 32, thereby starting to compact the powder P.

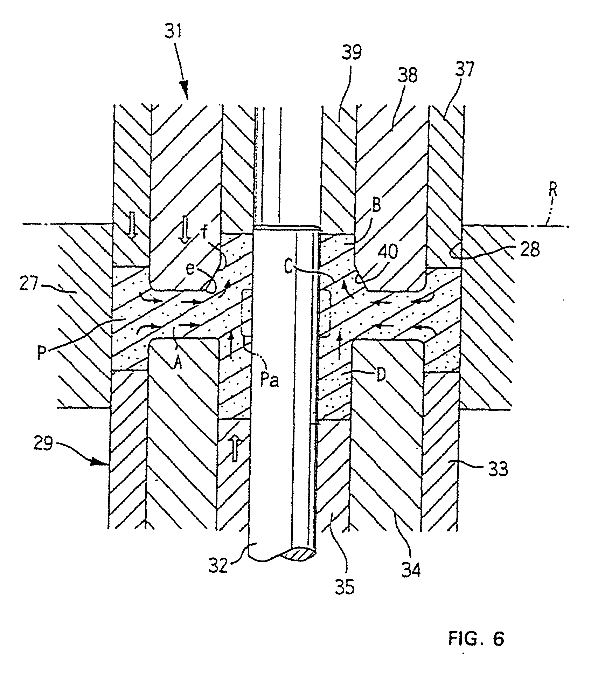

(c) Fig. 6 shows the following state. Specifically, the upper inner punch 39 is kept in a state where it stops compacting the powder P, the upper outer punch 37 compacts the powder P, and the lower inner punch 35 then compacts the powder P.
   In the die hole 28, a main body formation region A is defined by the upper and lower outer punches 37 and 33, and the upper and lower middle punches 38 and 34. On the other hand, a front tapered part formation region B above the tapered part 40, and a main body tapered part formation region C inside the tapered part 40, as well as an annular part formation region D lower than the main body formation region A, are defined between upper and lower inner punches 39 and 35.
   An area "e" joining the region A is large, and a slope "f" defining the region C functions as a guide. Therefore, pressed by the upper and lower outer punches 37 and 33, the upper and lower middle punches 38 and 34, and the lower inner punch 35, the powder P flows through two routes, i.e. from the region A to the region B via the region C, and from the region D to the region C.
(d) The upper outer and middle punches 37 and 38, and the lower outer and middle punches 33 and 34 compact the powder P, thereby completing production of the disc 19, as shown in Fig. 7. In this step, the powder P flows slightly to the region B and the region C as described above. Therefore, a sufficient amount of the powder P is introduced into the region C.
(e) Referring to Fig. 8, the upper and lower outer punches 37 and 33, the upper and lower middle punches 38 and 34 are kept from compacting the powder P. Thereafter, the upper and lower inner punches 39 and 35 compact the powder P, thereby forming the short columnar projection 20 and the annular part 21. The object 18 is in then in a completed state.
   In the foregoing compacting process, the powder P is sufficiently supplied to the regions B and C. Further, the short columnar projection 20 and the annular part 21 are shaped after the disc 19. Therefore, the powders P in the regions C and B do not flow back to the region A. Further, the sectional area of the region B is constant, so that a compacting force is only transmitted axially therein. This is effective in raising the density of the short columnar projection 20 and the annular part 21 of the object 18 to the required level.
(f) The upper punch 31 is raised above the die 27. Referring to Fig. 9, the lower punch 29 is lifted to the reference position R. Thereafter, the object 18 is delivered on a conveyor to a sintering furnace.

The produced object 18 having the short columnar projection 20 facing upward can be transferred onto the conveyor without changing its orientation.

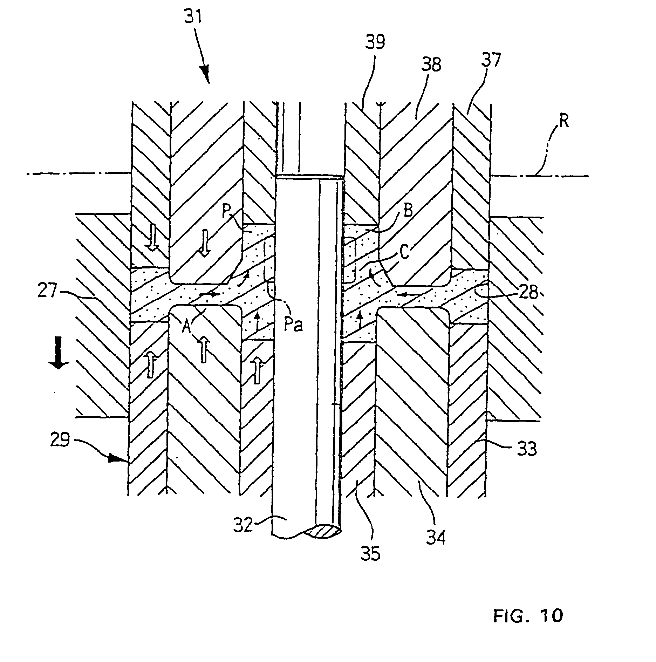

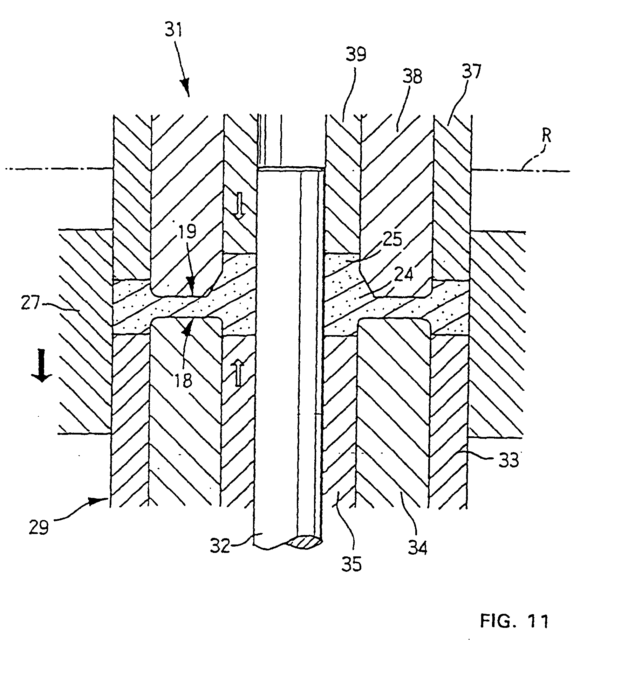

Figs. 10 and 11 show a second method of producing the object 18.

In the second method shown in Fig. 10, the die 27, and the upper and lower punches 31 and 29 are moved downward after the step (c) shown in Fig. 6. In this case, the core 32 is kept stationary. The lower inner punch 35 compacts the powder P. Further, the upper and lower outer punches 37 and 33, and the upper and lower middle punches 38 and 34 are operated to compact the powder P, thereby forming the disc 19. This is a first step.

When the punches are moved as described in the first step, the regions C and B approach a mass Pa of the powder P which is pushed out from the region A, sticks to the outer surface of the core 32, and becomes denser near the core 32. The mass Pa is then removed from the core 32, and pushed toward the regions C and B by the lower inner punch 35. Therefore, more powder P is supplied to the regions C and B as described above.

Following the foregoing operation, the upper and lower outer punches 37 and 33, and the upper and lower middle punches 38 and 34 are kept from compacting the powder P. Thereafter, the upper inner punch 39 and the lower inner punch 35 compact the powder P, thereby shaping the short columnar projection 20 and the annular part 21. Production of the object 18 is now complete.

Since the punches are moved in the foregoing order in the second step, the powder P is made to flow into the regions B and C. Therefore, this is effective in sufficiently compacting the powder P.

The short columnar projection 20 can be made denser by operating the punches in the foregoing sequence.

The following describe a specific example of the object 18.

The object 18 shown in Fig. 3 actually has the following specification. The tapered part 24 has a tapered angle θ=22°, and an axial length a=9 mm. The upright part 25 has an axial length b=8 mm, and an outer diameter d=45 mm. The disc 19 has an outer diameter c=154.5 mm. Therefore, the tapered angle θ=22° is in the range of 10° ≤ θ ≤ 50°. The ratio of "a" to "b" (i.e. a/b ≒ 1.1) is in the range of 0.8 ≤ a/b ≤ 1.3. Further, the ratio of "d" to "c" (i.e. d/c ≒ 0.29) is in the range of 0.25 ≤ d/c ≤ 0.35. The specification of the object 18 meets the requirements.

Examples 1 and 2 of the object 18 were produced using powder composed of pure iron (Fe) powder (Brand 300M produced by Kobe Seikosha) to which C, Cu and Ni were added. The powder was compacted by applying a pressure of 600t/cm² in order to obtain the object 18, and using the first method shown in Fig. 4 to Fig. 8, and the second method including the steps shown in Fig. 10 and Fig. 11.

Examples 1 and 2 are compared with a reference example which was produced using the first method, and an upper middle punch 38 without the tapered part 40.

Table 1 shows densities of short columnar projections 20 of Examples 1 and 2, and the reference example.

**Table 1**

| Object | Method | Density of short columnar projection (g/cm³) |
|---|---|---|
| Example 1 | #1 | 6.5 - 6.7 |
| Example 2 | #2 | 6.7 - 6.8 |
| Reference example | #1* | 6.0 - 6.3 |

| | | |
|---|---|---|
| *Note: The upper middle punch does not have any tapered part. | | |

As can be seen from Table 1, the short columnar projections 20 of Examples 1 and 2 have densities higher than that of the reference example. The short columnar projection of Example 2 has a higher density than that of Example 1. Therefore, the second method is better than the first method in terms of making the short columnar projection 20 dense.

It is also possible to simultaneously form teeth on the thick annular part 23 of the object 18 when the short columnar projection 20 is made. The present invention is also applicable to short columnar projections having a rectangular cross section.

An object 18 is composed of compacted powder, and has a disc 19 and a short columnar projection 20 extending from the disc 19. The short columnar projection 20 has a tapered part 24 in the shape of a truncated cone, and an upright part 25 in the shape of a cylinder. In order to form the short columnar projection 20 facing upward, powder P is filled, and the powder is compacted by operating upper and lower punches. During compacting, the disc 19 is formed first. Then, the powder P is made to flow from a disc forming region A to an upright part forming region B via a tapered-part forming region C, thereby forming the short columnar projection 20. The object 18 with the short columnar projection (20) facing upward is delivered without changing its orientation. Therefore, the object 18 is composed of compacted powder, and has a short columnar projection with a required density, without any difficulty.

## Claims

1. An object (18) composed of compacted powder, including a flat body (19) and a short columnar projection (20) extending from one side of the flat body (19), wherein the short columnar projection (20) has a tapered part (24) and an upright part (25), a sectional area of the tapered part (24) in a plane crossing the axis of the flat body (19) being gradually reduced as the tapered part (24) approaches the upright part (25), and a sectional area of the upright part (25) being constant with respect to the axis of the flat body (19), wherein the tapered part (24) is in the shape of a truncated cone, the cone angle θ between opposite sides thereof being 10° ≤ θ ≤ 50° and
wherein an axial length "a" of the tapered part (24) and an axial length "b" of the upright part (25) are in the ratio a/b of 0.8 ≤ a/b ≤ 1.3.

2. The object according to claim 1, wherein the flat body (19) is in the shape of a disc, the upright part (25) has a circular cross section, and a ratio between an outer diameter "d" of the upright part (25) and an outer diameter "c" of the flat body (19) is 0.25 ≤ d/c ≤ 0.35.

3. An object according to claim 1 or 2 being a material for gears.

4. A method of producing an object (18) composed of compacted powder, In which a press (26) including a die (27), a lower punch (29) being slidable in a die hole (28), and an upper punch (31) facing the lower punch (29) and being slidable in the die hole (28) is used to fill the die hole (28) with powder (P) and to compact the powder (P) with the upper and lower punches (31, 29) in order to obtain an object (18) having a flat body (19) and a short columnar projection (20) extending upward from one side of the flat body (19), at least the upper punch (31) having an inner punch member (39) slidably contained within an outer punch member (37), wherein
the short columnar projection (20) has a tapered part (4) and an upright part (25), a sectional area of the tapered part (24) in a plane crossing the axis of the flat body (19) being gradually reduced as the tapered part (24) approaches the upright part (25), and a sectional area of the upright part (25) being constant with respect to the axis of the flat body (19), and when compacting the powder (P), the flat body (19) is formed in a first step in which the powder (P) is to flow from a region (A) corresponding to the flat body (19) to a region (B) corresponding to the upright part (25) via a region (C) corresponding to the tapered part (24), and the short columnar projection (20) is formed in a second step by relatively moving the inner punch member (39) to the outer punch member (37).

5. A method of producing an object composed of compacted powder, in which a press (26) including a die (27), a lower punch (29) being slidable in a die hole (28) over a core (32), and an upper punch (31) facing the lower punch (29) and being slidable in the die hole (28) is used to fill the die hole (28) with powder (P) and to compact the powder (P) with the upper and lower punches (31, 29) In order to obtain an object (18) having a flat body (19) and a short columnar projection (29) extending upward from one side of the flat body (19), the upper and the lower punch (31, 29) each having an inner punch member (39, 35) slidably contained in a respective outer punch member (37, 33), wherein
the short columnar projection (20) has a tapered part (24) and an upright part (25), a sectional area of the tapered part (24) in a plane crossing the axis of the flat body (19) being gradually reduced as the tapered part (24) approaches the upright part (25), and a sectional area of the upright part (25) being constant with respect to the axis of the flat body (19), and when compacting the powder (P), the flat body (19) is formed in a first step sequence in which the die (27) and the upper and lower punches (31, 29) are moved downwards relatively to the core (32), then the lower inner punch member (35) is relatively moved towards the upper inner punch member (39) along the core (32), so that the powder (P) is made to flow from a region (A) corresponding the the flat body to a region (B) corresponding to the upright part via a region (C) corresponding to the tapered part, and then the upper and lower outer punch members (33, 37) are moved towards each other, and the short columnar projection (29) is formed in a second step by further moving the lower inner punch member (35) towards the upper inner punch member (39).

6. The method according to claim 5, wherein the beginning of the first step, the die (27) and the upper and lower punches (31, 29) are maintained stationary and the core (32) is raised, or the die (27) and the upper and lower punches (31, 29) are lowered, and the core (32) is raised.

## Patentansprüche

1. Aus kompaktiertem Pulver aufgebautes Objekt (18), das einen flachen Körper (19) und einen von einer Seite des flachen Körpers (19) abstehenden kurzen Säulenvorsprung (20) enthält, worin der kurze Säulenvorsprung (20) ein verjüngtes Teil (24) und ein aufrechtes Teil (25) aufweist, wobei eine Querschnittsfläche des verjüngten Teils (24) in einer die Achse des flachen Körpers (19) querenden Ebene allmählich abnimmt, wenn sich das verjüngte Teil (24) dem aufrechten Teil (25) annähert, und wobei eine Querschnittsfläche des aufrechten Teils (25) in Bezug auf die Achse des flachen Körpers (19) konstant ist, worin das verjüngte Teil (24) die Form eines Kegelstumpfs hat, wobei der Kegelwinkel θ zwischen seinen entgegengesetzten Seiten 10 ° ≤ θ ≤ 50° beträgt, und
worin eine axiale Länge "a" des verjüngten Teils (24) und eine axiale Länge "b" des aufrechten Teils (25) in einem Verhältnis a/b von 0,8 ≤ a/b ≤ 1,3 liegen.

2. Objekt nach Anspruch 1, worin der flache Körper (19) die Form einer Scheibe hat, wobei das aufrechte Teil (25) einen kreisförmigen Querschnitt hat und ein Verhältnis zwischen einem Außendurchmesser "d" des aufrechten Teils (25) und einem Außendurchmesser "c" des flachen Körpers (19) 0,25 ≤ d/c ≤ 0,35 beträgt.

3. Objekt nach Anspruch 1 oder 2, welches ein Material für Zahnräder ist.

4. Verfahren zur Herstellung eines aus kompaktiertem Pulver aufgebauten Objekts (18), worin eine Presse (26), die eine Matrize (27), einen in einem Matrizenloch (28) verschiebbaren Unterstempel (29) sowie einen zum Unterstempel (29) weisenden und in dem Matrizenloch (28) verschiebbaren Oberstempel (31) enthält, verwendet wird, um das Matrizenloch (28) mit Pulver (P) zu füllen und das Pulver (P) mit den Ober- und Unterstempeln (31, 29) zu kompaktieren, um ein Objekt (18) zu erhalten, das einen flachen Körper (19) und einen von einer Seite des flachen Körpers (19) nach oben abstehenden kurzen Säulenvorsprung (20) aufweist, wobei zumindest der Oberstempel (31) ein inneres Stempelelement (39) aufweist, das in einem äußeren Stempelelement (37) verschiebbar aufgenommen ist, worin
der kurze Säulenvorsprung (20) ein verjüngtes Teil (4) und ein aufrechtes Teil (25) aufweist, wobei eine Querschnittsfläche des verjüngten Teils (24) in einer die Achse des flachen Körpers (19) querenden Ebene allmählich abnimmt, wenn sich das verjüngte Teil (24) dem aufrechten Teil (25) annähert, und eine Querschnittsfläche des aufrechten Teils (25) in Bezug auf die Achse des flachen Körpers (19) konstant ist, und, wenn das Pulver (P) kompaktiert wird, der flache Körper (19) in einem ersten Schritt geformt wird, in dem das Pulver (P) von einer dem flachen Körper (19) entsprechenden Region (A) zu einer dem aufrechten Teil (25) entsprechenden Region (B) über eine dem verjüngten Teil (24) entsprechenden Region (C) fließt, und der kurze Säulenvorsprung (20) in einem zweiten Schritt geformt wird, in dem das innere Stempelelement (39) relativ zu dem äußeren Stempelelement (27) bewegt wird.

5. Verfahren zur Herstellung eines aus kompaktiertem Pulver aufgebauten Objekts, in dem eine Presse, die eine Matrize (27), einen in einem Matrizenloch (28) über einem Kern (32) verschiebbaren Unterstempel (29) sowie einen zum Unterstempel (29) weisenden und in dem Matrizenloch (28) verschiebbaren Oberstempel (31) enthält, verwendet wird, um das Matrizenloch (28) mit Pulver (P) zu füllen und das Pulver (P) mit den Ober- und Unterstempeln (31, 29) zu kompaktieren, um ein Objekt (18) zu erhalten, das einen flachen Körper (19) und einen von einer Seite des flachen Körpers (19) nach oben abstehenden kurzen Säulenvorsprung (20) aufweist, wobei der Ober- und der Unterstempel (31, 29) jeweils ein inneres Stempelelement (39, 35) aufweisen, das in einem jeweiligen äußeren Stempelelement (37, 33) verschiebbar aufgenommen ist, worin
der kurze Säulenvorsprung (20) ein verjüngtes Teil (24) und ein aufrechtes Teil (25) aufweist, wobei eine Querschnittsfläche des verjüngten Teils (24) in einer die Achse des flachen Körpers (19) querenden Ebene allmählich abnimmt, wenn sich das verjüngte Teil (24) dem aufrechten Teil (25) annähert, und eine Querschnittsfläche des aufrechten Teils (25) in Bezug auf die Achse des flachen Körpers (19) konstant ist, und wenn das Pulver (P) kompaktiert wird, der flache Körper (19) in einer ersten Schrittfolge geformt wird, in der die Matrize (27) und die Ober- und Unterstempel (31, 29) relativ zu dem Kern (32) nach unten bewegt werden, dann das untere innere Stempelelement (35) relativ zu dem oberen inneren Stempelelement (39) hin entlang dem Kern (32) bewegt wird, sodass das Pulver (P) veranlasst wird, von einer dem flachen Körper entsprechenden Region (A) zu einer dem aufrechten Teil entsprechenden Region (B) über eine dem verjüngten Teil entsprechende Region (C) zu fließen, und dann die oberen und unteren äußeren Stempelelemente (33, 37) aufeinander zu bewegt werden, und der kurze Säulenvorsprung (20) in einem zweiten Schritt geformt wird, in dem das untere innere Stempelelement (35) weiter zu dem oberen inneren Stempelelement (39) hin bewegt wird.

6. Verfahren nach Anspruch 5, worin zu Beginn des ersten Schritts die Matrize (27) und die Ober- und Unterstempel (31, 29) stationär gehalten werden und der Kern (32) angehoben wird, oder die Matrize (27) und der Ober- und Unterstempel (31, 29) abgesenkt werden und der Kern (32) angehoben wird.

## Revendications

1. Un objet (18) composé de poudre compactée, comportant un corps plat (19) et une courte saillie colonnaire (20) s'étendant depuis un côté du corps plat (19), dans lequel :
la courte saillie colonnaire (20) a une partie effilée (24) et une partie montante (25), l'aire de la section de la partie effilée (24) dans un plan croisant l'axe du corps plat (19) étant graduellement réduite au fur et à mesure que la partie effilée (24) s'approche de la partie montante (25), et l'aire de la section de la partie montante (25) étant constante par rapport à l'axe du corps plat (19), dans lequel la partie effilée (24) a la forme d'un tronc de cône, l'angle de cône θ entre des côtés opposés de celle-ci étant de 10° ≤ θ ≤ 50° et dans lequel la longueur axiale "a" de la partie effilée (24) et la longueur axiale "b" de la partie montante (25) sont dans le rapport a/b de 0,8 ≤ 1,3.

2. L'objet selon la revendication 1, dans lequel le corps plat (19) est en forme d'un disque, la partie montante (25) a une section transversale circulaire, et le rapport entre le diamètre extérieur "d" de la partie montante (25) et le diamètre extérieure "c" du corps plat (19) est 0,25 ≤ d/c ≤ 0,35.

3. Un objet selon la revendication 1 ou 2 ou 3, en tant que matériau pour des engrenages.

4. Un procédé de production d'un objet (18) composé de poudre compactée, dans lequel une presse (26) comprenant une matrice (27), un poinçon inférieur (29) étant susceptible de coulisser dans un trou de matrice (28), et un poinçon supérieur (31) faisant face au poinçon inférieur (29) et susceptible de coulisser dans le trou de matrice (28), sont utilisés pour remplir le trou de matrice (28) par de la poudre (P) et pour compacter la poudre (P) avec les poinçons supérieur et inférieur (31, 29), pour obtenir un objet (18) ayant un corps plat (19) et une courte saillie colonnaire (20) s'étendant vers le haut depuis un côté du corps plat (19), au moins le poinçon supérieur (31) ayant un élément de poinçon intérieur (39) contenu de façon coulissante à l'intérieur d'un élément de poinçon extérieur (37), dans lequel
la courte saillie colonnaire (20) a une partie effilée (4) et une partie montante (25), l'aire de la section de la partie effilée (24) dans un plan croisant l'axe du corps plat (19) étant réduite graduellement au fur et à mesure que la partie effilée (24) s'approche de la partie montante (25), et l'aire de la section de la partie montante (25) étant constante par rapport à l'axe du corps plat (19) et, lorsqu'on compacte la poudre (P), le corps plat (19) est formé en une première étape à laquelle la poudre (P) est laissée s'écouler depuis une zone (A) correspondant au corps plat (19) vers une zone (B) correspondant à la partie montante (25) via une zone (C) correspondant à la partie effilée (24), et la courte saillie colonnaire (20) est formée en une deuxième étape par enlèvement relatif de l'élément de poinçon intérieur (39) sur l'élément de poinçon supérieur (37).

5. Un procédé de production d'un objet composé de poudre compactée, dans lequel une presse (26) comprenant une matrice (27) un poinçon inférieur (29) étant susceptible de coulisser dans un trou de matrice (28) sur un noyau (32), et un poinçon supérieur (31) faisant face au poinçon inférieur (29) et susceptible de coulisser dans le trou de matrice (28) est utilisé pour remplir le trou de matrice (28) avec de la poudre (P) et pour compacter la poudre (P) avec les poinçons supérieur et inférieur (31, 29), de manière à obtenir un objet (18) ayant un corps plat (19) et une courte saillie colonnaire (20) s'étendant vers le haut depuis un côté du corps plat (19), les poinçons supérieur et inférieur (31, 39) ayant chacun élément de poinçon intérieur (39, 35) contenu de façon coulissante à l'intérieur d'un élément de poinçon extérieur (37, 33) respectif, dans lequel
la courte saillie colonnaire (20) a une partie effilée (24) et une partie montante (25), une aire de section de la partie effilée (24) dans un plan croisant l'axe du corps plat (19) étant réduite graduellement au fur et à mesure que la partie effilée (24) s'approche de la partie montante (25), et une aire de section de la partie montante (25) étant constante par rapport à l'axe du corps plat (19), et lorsqu'on compacte la poudre (P), le corps plat (19) est formé en une première séquence d'étapes lors de laquelle la matrice (27) et les poinçons supérieur et inférieur (31, 29) sont déplacés vers le bas par rapport au noyau (32), puis l'élément de poinçon intérieur inférieur (35) est l'objet d'un déplacement relatif en direction de l'élément de poinçon intérieur supérieur (39), le long d'un noyau (32), de manière que la poudre (P) soit laissée s'écouler depuis une zone (A) correspondant au corps plat à une zone (B) correspondant à la partie supérieure via une zone (C) correspondant à la partie effilée, puis les éléments de poinçon extérieurs supérieur et inférieur (31, 37) sont déplacés l'un vers l'autre et la courte saillie colonnaire (20) est formée en une deuxième étape, par le fait d'effectuer une déplacement supplémentaire de l'élément de poinçon intérieur inférieur (35) en direction de l'élément de poinçon intérieur supérieur (39).

6. Le procédé selon la revendication 5, dans lequel, au commencement de la première étape, la matrice (27) et les poinçons supérieur et inférieur (31, 29) sont maintenus stationnaires et le noyau (32) est levé, ou la matrice (27) et les poinçons inférieur et supérieur (31, 29) sont abaissés et le noyau (32) est levé.
